# EUROPEAN PATENT APPLICATION

(11) **EP 1 075 987 A2**
(43) Date of publication of application: **14.02.2001**
(21) Application number: 00306771.7
(22) Date of filing: 09.08.2000
(51) Int. Cl.: B60R 7/02

(54) **Partitioning device to be fitted in motor vehicle storage area**

(30) Priority: 10.08.1999 NZ 33714199
(71) Applicant: Russell, Rex Hamilton, Bucklands Beach, Auckland (NZ)
(72) Inventor: Russell, Rex Hamilton, Bucklands Beach, Auckland (NZ)
(74) Representative: Nettleton, John Victor

(57) **Abstract**

The present invention relates to a partitioning apparatus that is adapted to be fitted to a vehicle for partitioning the storage area of the vehicle. The apparatus includes at least one basal mounting member extending partially or wholly across the base of the storage area along a desired axis, where the at least one basal mounting member includes a track adapted to be fitted to the base of the vehicle storage area. The apparatus also includes one or more partitioning members supported directly or indirectly on or by the one or more basal mounting members where the partitioning member is provided or adapted to partition the storage area of the vehicle into a number of compartments.

## Description

### TECHNICAL FIELD

This invention relates to a protective device that restricts movement of goods during transit. More particularly, it relates to a collapsible and permanently installed or removable apparatus for partitioning a storage/transport area of a vehicle into a user selected number of compartments of a user selected dimension, thereby protecting the goods transported

### BACKGROUND ART

Spillages and physical damage often occur to goods being transported by vehicles. The storage/transport areas of vehicles, whilst providing an appropriate space to load goods, equipment etc, do not normally provide means to securely stow the items in a manner to avoid unwanted shifting of the goods. The motion of the vehicle may lead to shifting of the goods in transit, spilling, entangling or otherwise damaging same. Clearly this is undesirable, particularly with valuable items.

Straps or simple netting pockets for the storage of lightweight items are provided in some passenger vehicles. It is customary in motor vehicles however for drivers to store loosely packed or breakable items such as groceries, electronic equipment, glassware and so on in the passenger leg space of the vehicle in order to restrict the effects of vehicle motion on the items. This is not always convenient, especially if passengers are travelling in the vehicle. Alternatively the driver must pack the items in carry-cases or cartons to avoid damage before loading them into the dedicated storage area of the vehicle. This is time-consuming and not always convenient.

Car trunks, or the cargo transport areas of other types of vehicles or craft such as station wagons, hatchbacks, four wheel drive vehicles, aircraft, boats, ships, vans or similar, are commonly used to transport materials such as goods and freight. The materials transported can range from luggage, groceries, produce, to sporting equipment, electronic equipment, glass bottles or in certain types of vehicles (as is the case with four wheel drive vehicles fitted with 'jump scats') even pets or extra passengers. Thus the goods stored and/or transported on any given occasion may differ. As the car trunk is a contained space of a relatively large volume, transporting small or fragile goods renders them susceptible to movement within the trunk leading to spillages and possible damage. Further, if large objects such as a set of golf clubs are transported with smaller, more delicate items such as groceries, movement of the larger item may damage the smaller items during transit.

These problems are significantly amplified in the case of four wheel drive vehicles. As such vehicles are used on broken and rough terrain any cargo within the transportation area of such vehicles may be bounced and thrown around during use. This can damage the cargo carried by the four-wheel drive vehicle and also pose a safety risk to the vehicle's passengers and driver.

It would be desirable to provide a partitioning apparatus and method of operating same for car trunks that is easy to install and operate and is preferably collapsible and/or removable so as to permit greatest flexibility of use of the car trunk depending on the circumstances. In addition, the feature of partitioning the trunk into compartments providing storage areas of variable sizes would also be desirable.

These examples are given by way of example only and are not intended to be limiting.

It is an object of the present invention to address the foregoing problems or at least to provide the public with a useful choice.

Further aspects and advantages of the present invention will become apparent from the ensuing description that is given by way of example only.

### DISCLOSURE OF INVENTION

According to one aspect of the present invention there is provided a partitioning apparatus adapted to be fitted to a vehicle for partitioning the storage area of the vehicle, the apparatus including
at least one basal mounting member extending partially or wholly across the base of the storage area along a desired axis, said at least one basal mounting member including a track adapted to be fixed to the base of a vehicle storage area, and
two or more partitioning members formed from a backing board supported directly or indirectly on or by said at least one basal mounting member, and at least one secondary partition hingedly engaged with said backing board, said partitioning members being adapted to partition the storage area into compartments.

According to yet another aspect of the present invention there is provided a partitioning apparatus substantially as described above wherein a partitioning member is adapted to move along at least one track included into at least one basal mounted member.

As referred to herein "storage area" includes the area within or on any vehicle in which goods can be stored or transported.

It will further be appreciated that the basal mounting members of the apparatus of the present invention may be permanently installed or removably fitted in the vehicle in which they are used.

Further, the one or more partitioning members may be collapsible or permanently erected.

Preferably a basal mounting member may be removably fitted to the base of the storage area of a vehicle.

The vehicle storage area shall hereinafter be referred to as a car trunk although it will be appreciated it may refer to other vehicular storage areas such as the back area of station wagons, hatchbacks, off road vehicles such as four wheel drive vehicles, vans, truck trays, utility vehicle trays, trailers, and so on. It will be appreciated the present invention is applicable to any kind of transport or freight vehicle or craft, not limited to those specifically mentioned herein.

The basal mounting member or members function to indirectly or directly support the partitioning members as noted above. In a preferred embodiment a basal mounting member may include a single track removably fixed transversely on the floor of the trunk. However, any other number of tracks or orientation and/or site of attachment in the trunk are within the scope of the present invention if it permits the achievement of the aims of the present invention.

Reference in the main will also be made throughout this specification to the present invention including a single basal member only formed as a single track running across the floor of a vehicle's cargo area. However, it should be appreciated by those skilled in the art that any number of basal mounted members may be used in conjunction with the present invention and reference to the above only throughout this specification should in no way be seen as limiting. For example, in one alternative embodiment the present invention may include two basal mounting members configured as tracks running substantially parallel with one another along the floor of a vehicle's trunk. In such an instance both basal mounting members may be used to support one or more partitioning members in accordance with the present invention.

Preferably the basal mounting member, (hereinafter referred to as a track), is removable from its site of attachment by fastening means such as bolts, clips, magnetic fixations, VELCRO™, straps, clamps or any combinations thereof. Such systems enable the removable fixation of the track to the trunk floor, or to a spare wheel storage well cover. Alternatively, said track(s) may be fitted permanently to the floor of the storage area of a vehicle, e.g. a four-wheel drive vehicle. For example, vehicle manufacturers may wish to permanently install said tracks in vehicles as an "extra".

The one or more partitioning members may be supported directly or indirectly by or on the track. If fastening directly they may be fastened and/or attached in a manner that permits their attachment at varied sites along the track according to where the user desires the partitions to be located.

However, in a preferred embodiment of the present invention, the partitioning members may be supported indirectly on the track by way of an intermediate mounting member, hereinafter referred to as a mounting board. The mounting board may be of a variable shape and dimension according to the shape, size and number of tracks used, as well as the dimensions of the trunk and the nature of partitioning options required. In a desired configuration, the mounting board may include a substantially T shaped member, either axis of which may be aligned with the track extending transversely across the car trunk. The cross axis of the T shape may extend at substantially 90° to the axis of the track.

Preferably on the lower surface of the mounting board is a male member which engages with a female recess of a track, permitting the engagement together of the track and the mounting board and permitting the mounting board to slide along the track. However, any other means of sliding engagement of the mounting board with the track is within the scope of the present invention. For example in one alternative embodiment the invention may include a female member on the lower surface of the mounting board, which engages with a male element such as bar or rod fixed to the floor of the vehicle's storage area or fixed to a basal mounting member.

The invention may preferably also include a fixing means to fix the mounting board in a user-selected position in the track. Preferably this may be a locating knob which includes a threaded screw passing through the mounting board where the threaded screw is able to bear against the track to locate and lock the mounting member into position on the track. However, any other means of locating the mounting member at the desired position along the track is within the scope of the present invention.

The one or more partitioning members that may be supported by a basal mounting member may include a primary partitioning member having attached thereto one or more secondary partitioning members. The primary partitioning member, of which there is preferably one, although more than one may be provided depending on user option requirements, may preferably be a planar member hingingly engaged along a lower edge with the mounting board. The primary partition shall hereinafter be referred to as a backing board.

The backing board may, in being hingingly engaged with the mounting board, be capable of folding down flat onto or parallel to the mounting board when the trunk is not desired to be partitioned and of being erected into an upright position at substantially 90° to the mounting board and track to form an upright partition. Locating means such as a brace, clamp, prop or stay may be provided to orientate and retain the backing board in its upright position, thereby partitioning the trunk.

In connection with the backing board there may further be provided one or more secondary partitions hingingly engaged along a side edge to one or both sides of the backing board, in use further bisecting the space partitioned by the backing board. The secondary partitions may also be planar bodies and shall hereinafter be referred to as flaps.

Furthermore, in some instances or embodiments of the present invention tertiary partitions may also be hingedly attached to secondary partitions. A tertiary partition may be indirectly attached to a backing board through a secondary partition to provide the resulting apparatus with a number of possible configurations or orientations depending on the requirements of the user. In such embodiments this will provide the option of creating an extra compartment depending on the requirements of the user.

Although in a preferred embodiment the backing board and flaps may be constructed of a solid material such as wood, composite particle boards, metals, polyester, plastics or any combinations thereof, in other embodiments mesh or netting may also be used for the partitioning role.

It should also be understood that one or more tracks, mounting boards, backing boards and/or flaps may be provided in accordance with the partitioning requirements of the user. As discussed above those skilled in the art should appreciate that more than one track as well as more than one backing board, mounting board or flap may be included into the present invention to provide the partitions required depending on the particular vehicle involved and the requirements of the user.

In a preferred embodiment using T shaped embodiment mounting board, there may be provided locating means on the mounting board to locate the preferred single secondary partitioning flap in position thereby affixing upright the backing board and flap to include a T shaped partitioning. However, it should be appreciated that any means of supporting the flap(s) and/or backing boards in an upright position is within the scope of the present invention as long as it is subsequently collapsible in accordance with the aims of the present invention.

It can be seen that the present invention provides a mechanically simple and easy to install and operate apparatus for conveniently partitioning a vehicle storage area such as a vehicle trunk into sub-compartments of user selected dimensions. Furthermore, one manufactured version fitting several different makes and models of vehicle may also be provided.

According to another aspect of the present invention there is provided an apparatus substantially as described above where it is provided in a pre-packaged or kitset form available for purchase and installation by a vehicle owner or supplier.

According to a further aspect of the present invention there is provided an apparatus substantially as described above wherein it is in a form installed by the manufacturer of the vehicle.

According to another aspect of the present invention there is provided a method of partitioning a vehicle storage area into compartments of a user selected or fixed number and/or dimension including
(a) installing one or more basal mounting members of an apparatus to partially or wholly extend across the base of the storage area along a desired axis, and
(b) supporting at least one primary partitioning member and at least one secondary partitioning member directly or indirectly on or by a basal mounting member thereby partitioning the vehicle storage area into compartments of a user selected number and/or dimension.

According to a further aspect of the present invention there is provided a method of partitioning a vehicle storage area into compartments substantially as described above further characterised by the subsequent steps of:
(c) moving one or more partitioning members along the basal mounting member to partition the vehicle storage area into compartments of a user selected number and/or dimension.

According to yet another aspect of the present invention there is provided a method of partitioning a vehicle storage area into compartments of a user selected number and/or dimensions including the steps of:
(a) installing one or more basal mounting members of an apparatus to partially or wholly extend across the base of the storage area along a desired axis, and
(b) supporting at least one primary partitioning member and at least one secondary partitioning member directly or indirectly on or by a basal mounting member, and
(c) pivoting said at least one secondary partitioning member with respect to said at least one primary partitioning member to partition the vehicle storage area into compartments of the user's selected number and/or dimension.

It will be appreciated that this method restricts unwanted movement of goods during transit as the goods are retained within compartments of a user-selected dimension and number created by fixed or collapsible and removable partitions.

In a preferred embodiment one basal mounting member, hereinafter referred to as a track, may be installed horizontally across the vehicle storage space, hereinafter referred to as a car trunk, by bolting it or otherwise removably attaching same to the base of the car trunk to enable easy access to a spare wheel where this is stored in vehicle trunk. However, in the case of four wheel drive vehicles the track may be permanently fixed to the floor.

Preferably the one or more partitioning members, hereinafter referred to as a backing board and flaps attached thereto as described above, are indirectly supported on the track by the mounting board. The mounting board may be located at the desired position on the track, the backing board and flaps erected into an upright position and fixed in place such that the trunk is thereby partitioned into compartments of a desired size and position.

### BRIEF DESCRIPTION OF DRAWINGS

Further aspects of the present invention will become apparent from the ensuing description that is given by way of example only and with reference to the accompanying drawings in which:
- Figure 1: is a perspective view of a partitioning apparatus according to one aspect of the present invention, and
- Figure 2: is a side view of the partitioning apparatus of Figure 1 shown in a collapsed state, and
- Figure 3: is a bottom view of the apparatus shown in Figures 1 and 2, and
- Figure 4: is a perspective view of the apparatus of the above Figures shown in a collapsed position, and
- Figure 5: is a view of the device of Figures 1 to 4 in upright position in a car trunk, and
- Figure 6: is a perspective view of a partitioning apparatus according to a further aspect of the present invention, and
- Figure 7: is a side view of the apparatus of figure 6 in a collapsed state, and
- Figure 8: is a bottom view of the apparatus of Figure 6, and
- Figure 9: is a perspective view of a partitioning apparatus according to a further aspect of the present invention, and
- Figure 10: is a perspective view of a partitioning apparatus according to a further aspect of the present invention, and
- Figure 11: is a bottom view of the apparatus of Figure 10, and
- Figure 12: is a view of the device of Figures 6 to 8 in an upright position in the storage area of a four-wheel drive vehicle.

### BEST MODES FOR CARRYING OUT THE INVENTION

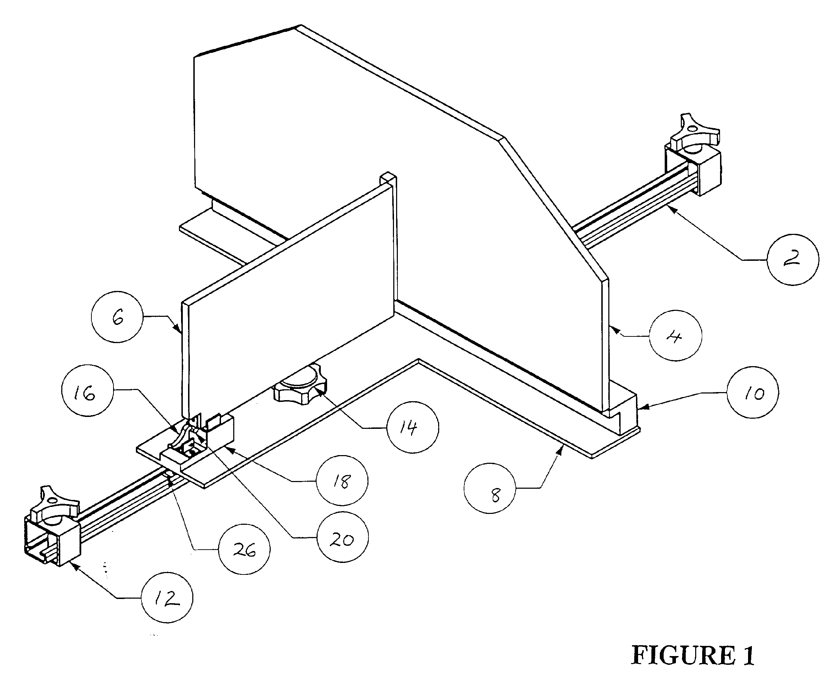

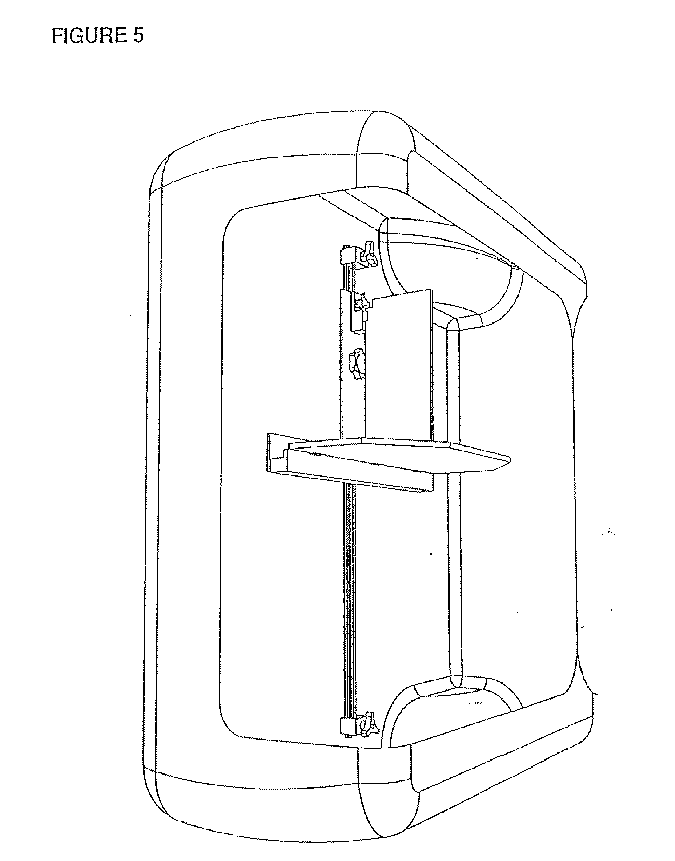

Figures 1 to 5 show a partitioning apparatus as configured in accordance with one aspect of the present invention. Figures 1 through 5 show a number of different views of this apparatus in both upright and collapsed positions and installed in use in a car trunk.

Referring to Figure 1 there is illustrated an apparatus for partitioning a vehicle storage area into compartments of user selected dimensions including a basal mounting member herein represented by track 2 adapted to be removably attached to and extending partly or wholly across the base of the vehicle storage area along a desired axis.

The one or more partitioning members partitioning the trunk into compartments of user selected dimensions are herein represented by a primary partitioning member, backing board 4 and a secondary partitioning member flap 6. The partitioning members backing board 4 and flap 6 in this embodiment may be supported directly or indirectly on track 2. In this embodiment backing board 4 and flap 6 are supported on track 2 by way of a mounting board including lower T shaped planar member 8 attaching to upper mounting board portion 10 of member 8. Although the backing board 4 may be attached to upper mounting board 10 by any desired means, in this embodiment to permit the desired collapsible function of the apparatus of the present invention backing board 4 is hingingly engaged by hinges, not shown in this Figure, to upper mounting board portion 10. Similarly, although flap 6 may be attached by any desired means to backing board 4, preferably a hinging connection is provided by hinges, again not shown in this Figure.

It can be seen that the securing means provided to removably attach the track 2 in position on the car trunk floor includes screw clamp 12, the screw clamp 12 fixing track 2 firmly in position. It is envisaged that screw clamp 12 may permanently be installed on the car trunk floor for safety and convenience purposes.

It can be seen that track 2 is recessed to permit a male member 26 (such as a rail or rod) of the planar mounting board portion 8 to engage with the recess of track 2 and be slidingly engaged therewith. Thus in use mounting board 8 can be slid up and down track 2 to locate it in any desired position along track 2 and thereafter secured in position by use of locating knob 14.

In use, once mounting board 8 has been slid along track 2 backing board 4 will then unfold into a substantially vertical position, from its previously collapsed position, at substantially 90° to track 2. The mounting board may then be secured in position by locating knob 14. Although means may be provided to fix this primary partition backing board 4 into position thereby partitioning the car trunk space, preferably backing board 4 is retained in its upright position by means of also folding out flap 6 from a collapsed position and securing it in relation to mounting board 8 by any desired means, thereby providing sub-compartments. In this embodiment shown, flap 6 is secured into position in relation to mounting board 8 by use of a latch assembly. That is, a latch 16 is mounted on a block assembly on mounting board 8, the latch 16 clipping on to snib 20 on a lower corner of flap 6, thereby securing same into position and henceforth retaining the flap 6 and backing board 4 in an upright position in relation to the mounting board 8 and track 2 assembly. It will be appreciated that any desired means however of retaining the partitions eg in this embodiment including backing board 4 and flap 6 are within the scope of the present invention. It will also be appreciated that although in this case only a single flap 6 has been shown mounted to backing board 4, any number of primary partitions such as backing board 4 and flap 6 may be provided according to the partitioning requirements of the user.

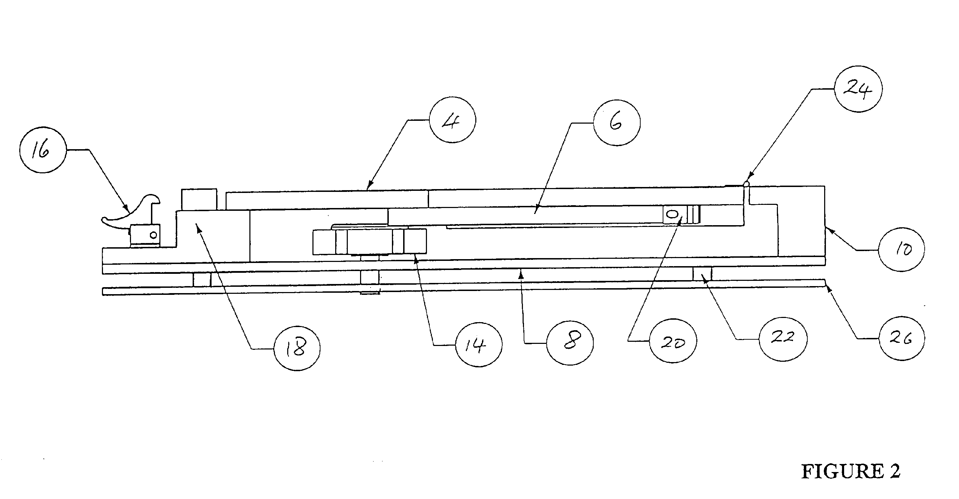

Referring to Figure 2 the side-on collapsed view of a partitioning apparatus according to one aspect of the present invention is illustrated. Components illustrated in this embodiment not shown in Figure 1 include hinge 24 hingingly engaging backing board 4 to upper mounting board portion 10. Also shown with the folded down collapsed flap 6 is snib 20 which in use when erected is latched onto by latch 16 shown mounted on block 18. Also shown is spacer 22 in use designed to upwardly distance mounting board section 8 in relation to male member 26, which may be a rail or rod, to permit appropriate space for movement along the track 2 prior to securing in position by locating knob 14.

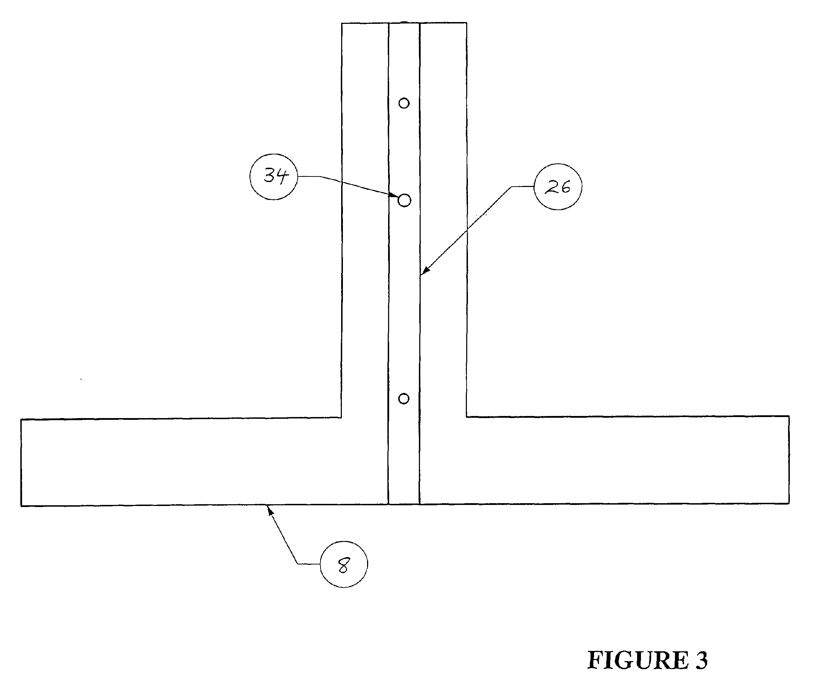

Referring to Figure 3, there is shown a bottom view of planar mounting board portion 8 with male member rod or rail 26 which in use fits into a female recess in track 2, not shown in this Figure, and permitting sliding engagement with same. Threaded hole 34 carries locating nut 14 (not shown).

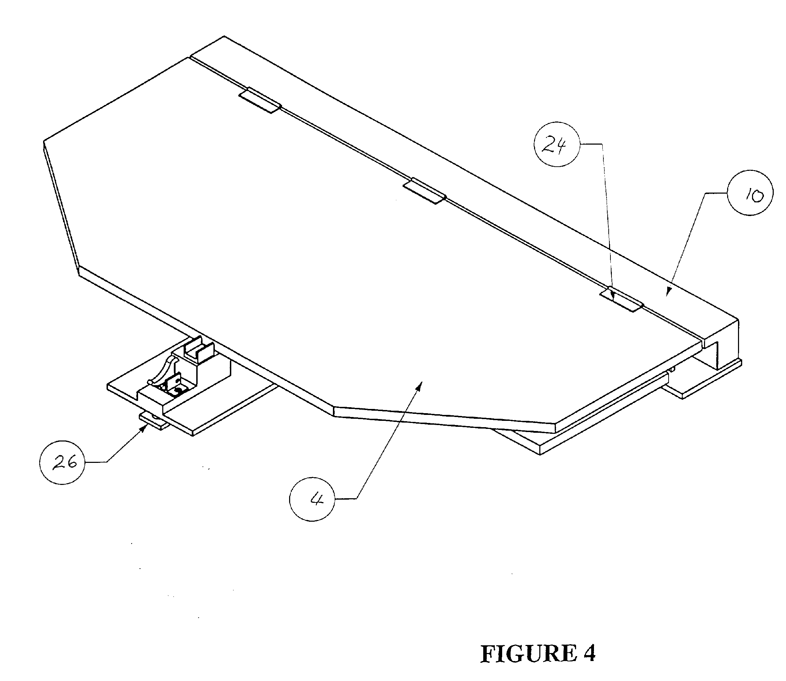

Referring to the perspective view of the apparatus in a collapsed position as shown in Figure 4, backing board 4 is shown completely folded flat in relation to upper mounting board portion 10 which in use permits the car trunk to not be partitioned and large items requiring substantially all of the trunk space to be simply placed on top of the folded down partitioning apparatus of the present invention. This Figure also represents the collapsed partitioning members as a discrete unit once removed from the basal mounting member ie track. The unit along with track 2 can be easily removed from the car trunk when desired by releasing screw clamps 12.

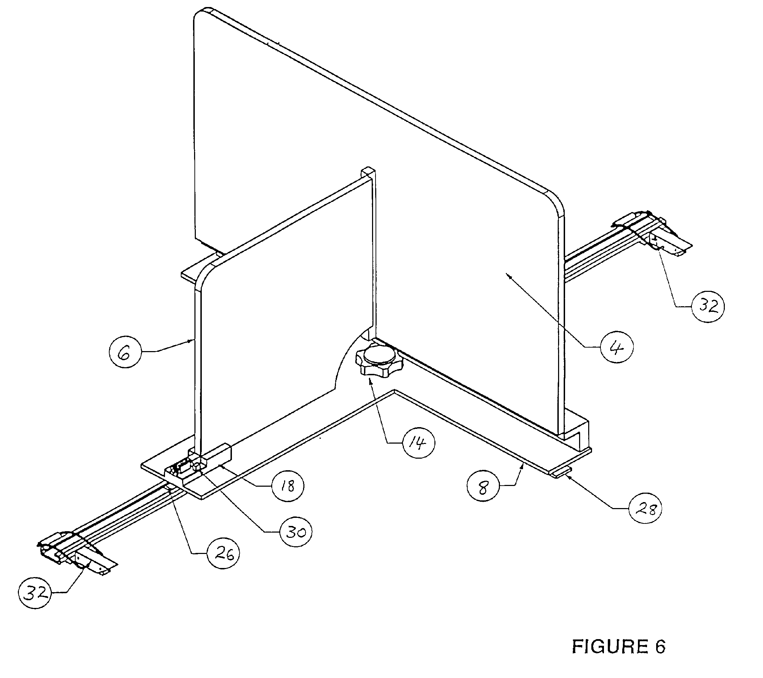

Referring to Figure 6, backing board 4 and flap 6 are shown with rounded edges rather than straight angled edges as shown in previous embodiments. Of course, any configuration of partitioning member is within the scope of the present invention.

Also shown in this figure is an alternative means of securing the flap 6 and backing board in an upright, unfolded position, including sliding bolt 30.

Alternative means of securing track 2 on the trunk floor are also shown, including a hinge clamp 32 mechanism. The hinge clamp 32 may be permanently attached to the trunk floor and, when desired to be used, track 2 may simply be slid into position and the hinge clamped shut over the end of track 2, securing same in position.

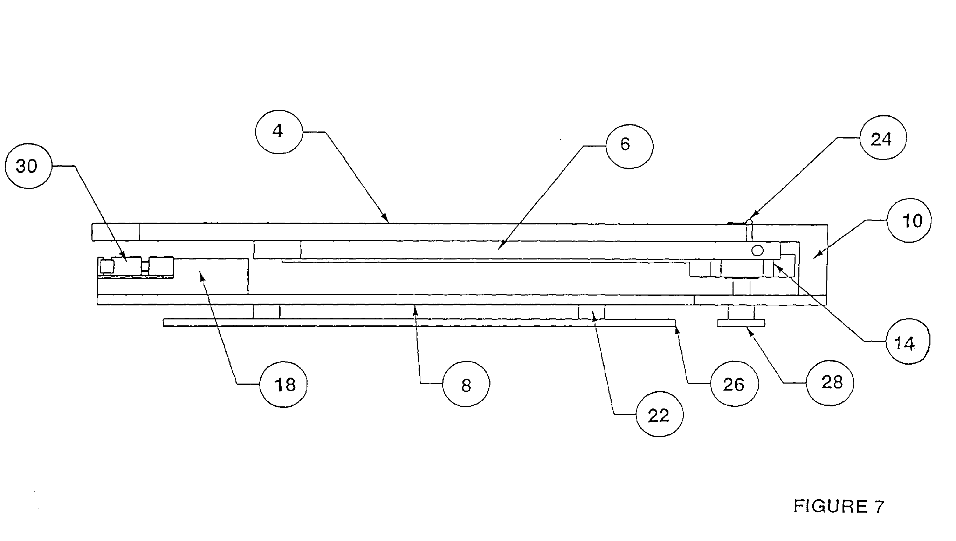

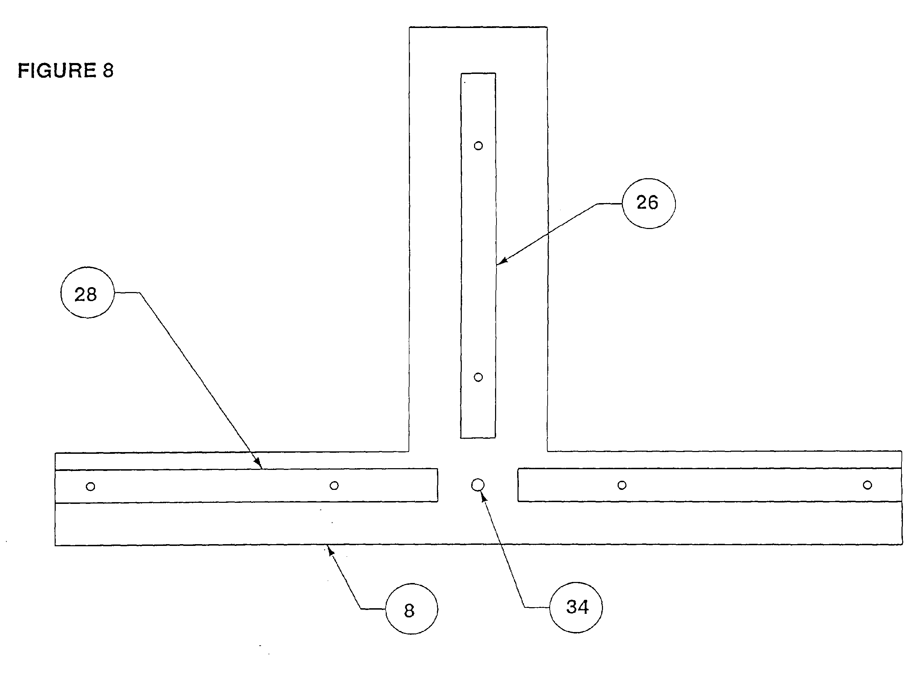

As is shown in Figures 6 to 8, the undersurface of mounting board 8 may be fitted with two sets of rails, namely primary rail male member 26, and a set extending transversely to same, including rails 28. The provision of the two sets of rails 26 and 28 permits mounting of the apparatus optionally in four different directional orientations ie the vertical plane of backing board 4 may be changed by 90, 180 or 270 degrees. This lends the apparatus great flexibility in relation to the location and size of the desired compartments and subcompartments which the apparatus is used to partition the trunk into.

In these figures locating knob 14 is shown in a different position to that shown in figures 1, 2 and 3. By adapting the construction of the apparatus to provide the locating knob 14 in a position between both rails 26 and 28, a single locating knob 14 mounted in threaded hole 34 can be used to securely lock the apparatus mounting board 8 into a desired position on track 2 in any of the four optional mounting orientations.

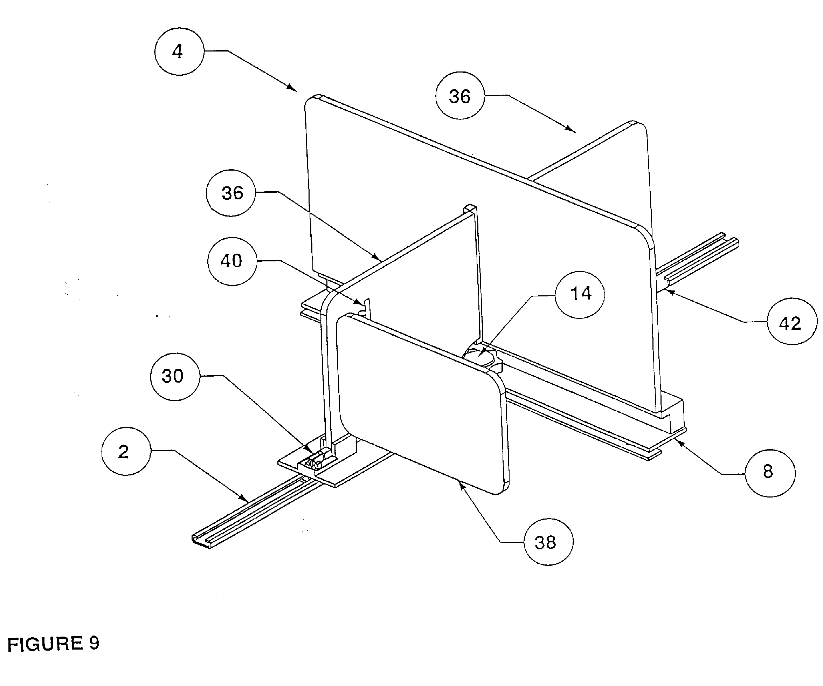

Referring to Figure 9 there is illustrated a partitioning apparatus according to a further aspect of the present invention, for partitioning a storage area into compartments of user selected number and dimensions. The apparatus shown includes a tertiary flap 38 which is hingedly attached to one of the pair of secondary flaps 36. Each of the secondary flaps 36 are in turn hingedly attached to a backing board 4. The tertiary flap 38 when required by the user can be positioned in the configuration shown in Figure 9 and held in place by a stay 40 to create a further storage compartment. Unfolding the secondary flap 36 as shown in Figure 9 can create one additional storage compartment.

The basal mounting track 2 illustrated in this example bears a slot 42 partly visible in Figure 9, to enable the assembly to be mounted on and dismounted from track 2 when the track is permanently fixed to the floor of a vehicle such as a four wheel drive.

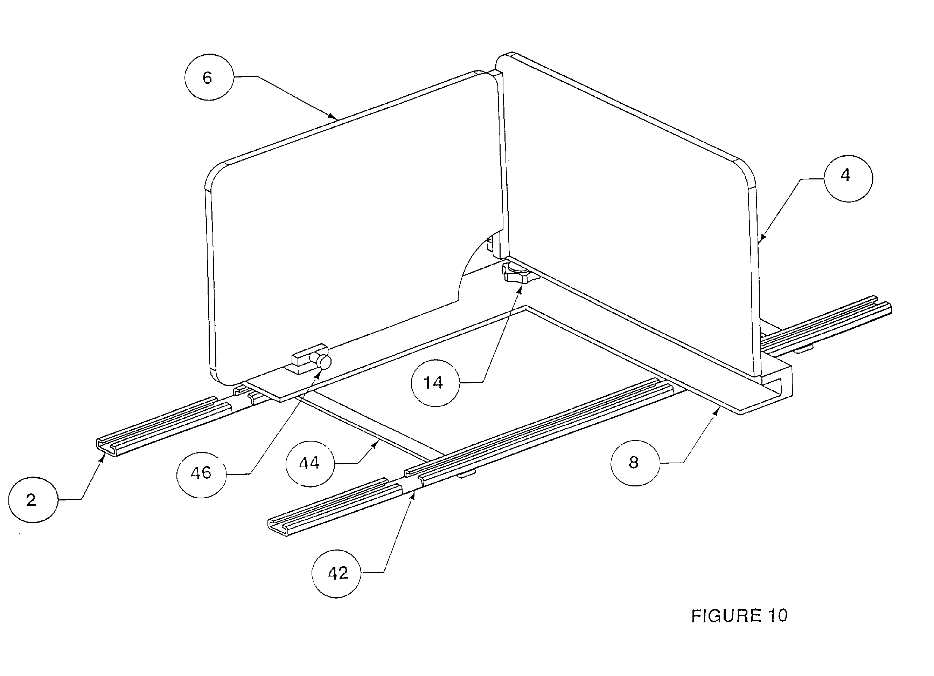

Referring to Figure 10 there is illustrated a vehicle cargo transport area partitioning apparatus according to a further aspect of the present invention, which includes a partitioning flap 6 mounted on one edge of backing board 4. In the embodiment shown the mounting board 8 is an L shaped planar member which mounts on to two parallel basal tracks 2 joined by support spacers 44.

Also shown in Figure 10 is an alternative means of securing flap 6 and backing board 4 in an upright unfolded position, which includes a spring loaded retracting finger bolt 46.

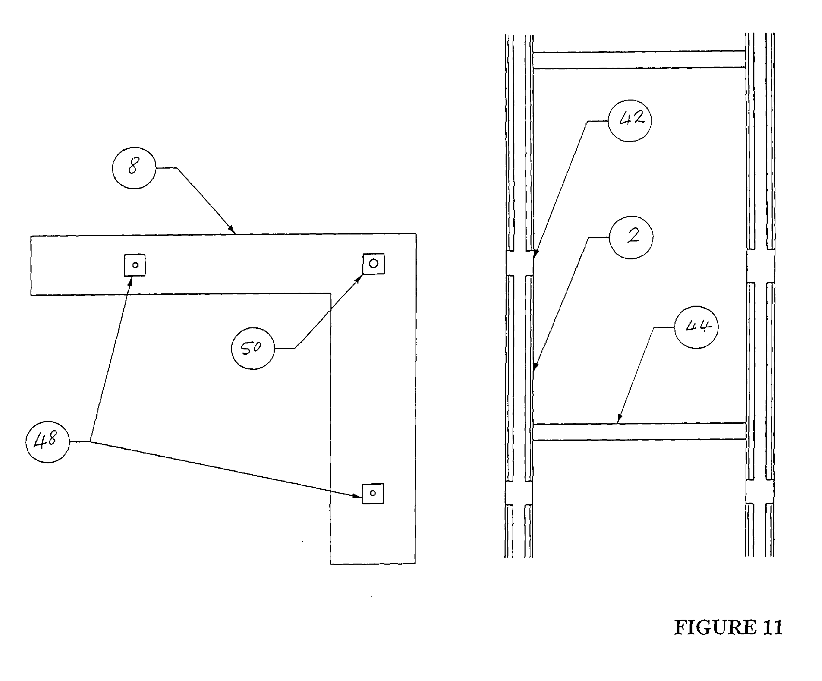

Referring to Figure 11, there is shown a bottom view of a planar mounting board 8, from the apparatus of Figure 10, with feet 48 and 50 which enable mounting of the board on to tracks 2 at slots 42. These slots allow the apparatus to be slid to a desired position and locked with the locating knob 14 shown in Figure 10. The positioning of feet 48, 50 and slots 42 allows the user choice in the orientation of the apparatus on the tracks in any of four different orientations.

Not shown in the Figures are supplementary appendages such as clip or clasp arrangements, or stabilising pads or cushions which may be specifically fitted to reduce rattling of the apparatus when a vehicle is in motion.

In the embodiment shown the mounting foot 50 is centrally threaded to connect to the locating knob 14 shown in Figure 10. Locating knobs may also be fitted to mounting feet 48, but are not present in this embodiment of the invention.

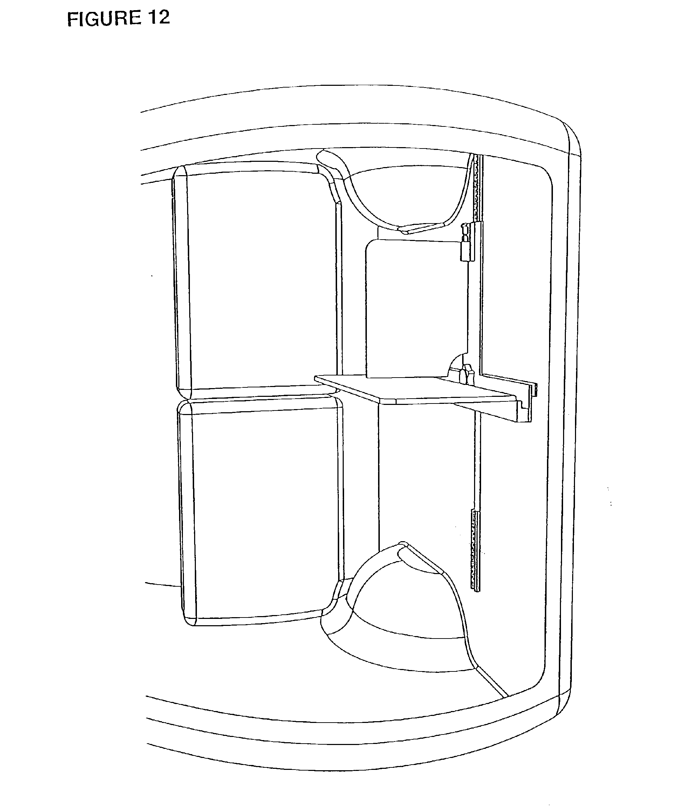

Referring to Figure 12, the device of Figures 6 to 8 is shown fitted and in an upright in-use position in a four wheel drive vehicle.

It can be seen that the partitioning apparatus of the present invention enables the loading and transportation of items of varying size and fragility in the storage area of a vehicle in a manner that helps avoid the movement or sudden shifting of these items which might otherwise result in spillages, damage, entangling or striking passengers in the case of a four-wheel drive vehicle.

Advantages of the partitioning apparatus of the present invention include the ability to partition the otherwise undivided vehicle cargo space, and the facility to quickly fold down the partitioning apparatus to restore the original conformation of the trunk space and furthermore allows the entire partitioning apparatus to be removed easily and rapidly if desired. For example, it may be desired to remove the partitioning apparatus to enable access to a spare tyre if the vehicle type is such that it is kept beneath the floor of the trunk.

Furthermore, ease of removal and re-installation of the apparatus allows the option of placing a plastic sheeting mat or any other similar cover on the floor of a vehicle storage area. This may serve as secondary protection from spills of powders or liquids.

Another obvious advantage is that the flexibility of the present device permits the size of the compartments to be easily and quickly varied.

A further advantage of the present invention is the possibility to manufacture one version or design that will fit several different makes and sizes of vehicle.

It will also be appreciated that the partitioning apparatus of the present invention is of simple design and would accordingly provide ease of manufacture.

Aspects of the present invention have been described by way of example only and it should be appreciated that modifications and additions may be made thereto without departing from the scope thereof as defined in the appended claims.

## Claims

1. A partitioning apparatus adapted to be fitted to a vehicle for partitioning the storage area of the vehicle, the apparatus including
at least one basal mounting member extending partially or wholly across the base of the storage area along a desired axis, said at least one basal mounting member including a track adapted to be fixed to the base of a vehicle storage area, and
two or more partitioning members which include a backing board pivotably attached directly or indirectly to said at least one basal mounting member, and at least one secondary partition pivotably attached to said backing board, said partitioning members being adapted to partition the storage area into two components.

2. A partitioning apparatus as claimed in claim 1 wherein a partitioning member is adapted to move along at least one track included into at least one basal mounting member.

3. A partitioning apparatus as claimed in claims 1 or 2 which includes two basal mounting members orientated substantially parallel to one another.

4. A partitioning apparatus as claimed in claims 1 or 2 which includes a single basal mounting member only.

5. A partitioning apparatus as claimed in any previous claim which includes a mounting board positioned between said at least one basal member and said one or more partitioning members, said mounting board being adapted to support said partitioning member or members indirectly on at least one basal member.

6. A partitioning apparatus as claimed in claim 5 wherein the mounting board includes a male element adapted to engage with a female recess within a basal mounting member track.

7. A partitioning apparatus as claimed in claim 5 wherein the mounting board includes a female recess adapted to receive a male element incorporated into a basal mounting member.

8. A partitioning apparatus as claimed in any one of claims 5 to 7 which includes a fixing means adapted to fix the mounting board in a user selected position on a track of at least one basal mounting member.

9. A partitioning apparatus as claimed in claim 8 wherein the fixing means includes a threaded screw passing through the mounting member, which is adapted to engage with a basal mounting member track to lock the mounting member in place on the track.

10. A partitioning apparatus as claimed in any one of claims 5 to 9 wherein a partitioning member includes a backing board hingedly engaged to a mounting board.

11. 1 A partitioning apparatus as claimed in claim 10 wherein the backing board may pivot with respect to the mounting board to lie substantially parallel to the mounting board and may pivot with respect to the mounting board to be orientated substantially at a right angle with respect to the mounting board.

12. A partitioning apparatus as claimed in any one of claims 10 or 11 wherein the backing board includes a locking means adapted to orientate and retain the backing board substantially at a right angle with respect to the mounting board.

13. A partitioning apparatus as claimed in any previous claim which includes one or more tertiary partitions hingedly engaged with one or more secondary partitions.

14. A method of partitioning a vehicle storage area into compartments of a user selected number and/or dimensions including the steps of:
(a) installing one or more basal mounting members of an apparatus to partially or wholly extend across the base of the storage area along a desired axis, and
(b) pivotably attaching at least one primary partitioning member directly or indirectly on the basal mounting member, and
(c) pivotably attaching a secondary partitioning member to said at least one primary partitioning member.

15. A method of partitioning a vehicle as claimed in claim 14 further characterised by the subsequent step of
(d) moving one or more partitioning members along the basal mounting member to partition the vehicle storage area into compartments of a user selected number and/or dimension.

16. A method of partitioning a vehicle storage area into compartments of a user selected number and/or dimensions including the steps of:
(a) installing one or more basal mounting members of an apparatus to partially or wholly extend across the base of the storage area along a desired axis, and
(b) supporting at least one primary partitioning member and at least one secondary partitioning member directly or indirectly on or by a basal mounting member, said at least one primary partitioning member being pivotably attached to the basal mounting member, and said at least one secondary partitioning member being pivotably attached to said at least one primary partitioning member, and
(c) pivoting said at least one secondary partitioning member with respect to said at least one primary partitioning member to partition the vehicle storage area into compartments of the user's selected number and/or dimension.

17. A partitioning apparatus substantially as herein described with reference to and as illustrated by the accompanying drawings and/or examples.

18. A method of partitioning a vehicle substantially as herein described with reference to and as illustrated by the accompanying drawings and/or examples.
